# EUROPEAN PATENT APPLICATION

(11) **EP 1 655 585 A1**
(43) Date of publication of application: **10.05.2006**
(21) Application number: 04105638.3
(22) Date of filing: 09.11.2004
(51) Int. Cl.: G01F 1/075, G01F 1/115, G01F 15/00

(54) **Two-terminal circuitry for flowmeters**

(71) Applicant: YALHI, Ömer, Istanbul 34055 (TR)
(72) Inventor: YALHI, Ömer, Istanbul 34055 (TR)
(74) Representative: Sevinç, Erkan

(57) **Abstract**

According to the present invention, there is provided a flowmeter device circuitry coupled to a meter interface unit by a two-wire cable, the metering device circuitry comprising at least three magnetic switching means, each having a first and a second terminal and only two of those having a common equi-potential node being connected to an input of said control unit, the second terminal of said switching means being connected to a common electrical link through separate impedances; the device further comprising a flow driven element whose rotation being directly proportional to the flow rate e.g. in a conduit, the latter being adapted to operate magnetic switches in succession. The meter interface unit comprises a voltage supply being integrated with the same.

## Description

### Technical Field of the Invention

The present invention relates to electronic circuitry for flowmeters intended to monitor flow rate, flow direction as well as any fraudulent magnetic interventions aimed to disrupt the operation of flowmeters.

### Background of the Invention / Prior Art

Flowmeters are used in measuring flow amounts at a certain point through a given line in which a substance water, gas etc. is centrally fed to a specific consumer. Flow rate is typically sensed by mechanical means and transmitted to a control point in electronic format. Additional to monitoring of flow rate, such mechanisms are preferred to meet features such as monitoring of reverse flow and/or fraudulent interventions mainly in the form of magnetic attempts to block flow sensing switches. In the latter case, billing a consumer in respect of a reduced or incorrect consumption rate is avoided and accurate operation of the flowmeter is maintained. As is also known in the technical field, flowmeters are for long quite well-known in their use of electromagnetic principles. Although not exclusively, those are also used in remote sensing from for example a control point and are advantageous in that they make recourse to the consumer unnecessary.

In the technical field of the present invention, there are quite a lot of patents/applications available to the public. Among others, GB 2 123 556 A seems to show up as the most relevant prior art with regard to the present invention, disclosing a flowmeter in which a meter interface unit is typically coupled to electrical means where flow rate and direction together with presence of external magnetic field are sensed through use of Reed switches that are typically closing a circuit in the presence of a magnetic field. There are provided three Reed switch sub-circuits, each being radially in equal distances on a rotating element directly driven by flow e.g. in a pipe, so that only one Reed switch will close its circuit at once and all three sub-circuits will subsequently be closed so as to reflect flow rate and direction. According to the same, each switch circuit is coupled to a meter interface unit between a common ground terminal and three separate terminals. The latter three are energized and potential difference between the terminals of resistive impedance is measured when the Reed switch connected thereto is opened and closed respectively.

The circuit arrangement disclosed above requires at least seven terminals to correctly sense flow rate, flow direction and presence of an external magnetic field as is the case for fraudulent interventions. Bearing in mind that control units for flowmeters or meter interface units as they are commonly referred to may be located at from 2 cm to 200 m away from the metering devices, the disclosure proposed by GB 2 123 556 would be deficient especially due to extra costs required for laying down seven separate conductor lines not only in the sense of material costs but also in the sense of labor costs. The present invention, on the other hand, provides a two-terminal connection wiring for metering device to the meter interface unit so that extra costs are avoided in case a longer connection to the control unit is required, while at the same time enabling monitoring of flow rate, flow direction and fraud.

### Objects of the Invention

It is of a primary object of the present invention to provide a flowmeter in which the metering device electronic circuitry is a two-terminal one so as to reduce wiring in between the meter interface unit and the metering device.

### Summary of the Invention

According to the present invention, there is provided a flowmeter device circuitry coupled to a meter interface unit by a two-wire conductor, the metering device circuitry comprising at least three magnetic switching means, each having a first and a second terminal and only two of those having a common equi-potential node being connected to an input of said control unit, the second terminal of said switching means being connected to a common electrical link through separate impedances; the device further including a flow driven element whose rotation being directly proportional to the flow rate in e.g. a pipe, the latter being adapted to switch magnetic switches when in use. In addition, the meter interface unit comprises a voltage supply being integrated with the same.

### Brief Description of the Drawings

Accompanying drawings are given solely for the purpose of exemplifying a flowmeter whose advantages over prior art were outlined above;

Figure 1 illustrates the flowmeter circuitry according to the present invention.

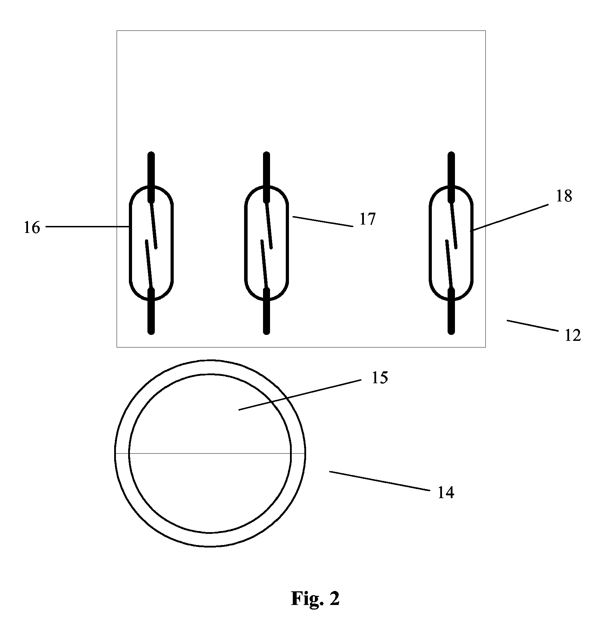

Figure 2 illustrates physical settlement of the reed switches with regard to the rotation element according to the present invention.

### Detailed Description of the Invention

In view of the drawings briefly described above, the present invention proposes a flowmeter electronic circuitry adapted to be used in a fluid metering device, comprising a central control unit connected to a metering device (12), in which a circuitry (13) comprising electrical means to sense flow rate, flow direction and fraudulent magnetic type intervention is provided, as will be hereinafter described in detail.

The metering device (12) comprises in a conventional manner a rotating element (14), whose rotational movement is directly proportional to the flow rate along a conduit. Besides, a magnet, which is fixedly attached thereon, i.e. on said rotating element (14), moves along a tangential path to operate magnetic switches e.g. Reed switches in a conventional manner. Said rotating element (14), in an alternative manner, may comprise a magnetized portion (15) and a non-magnetized portion, each portion being designed to occupy equal halves of said rotating element (14).

According to the present invention, at least three magnetic switches e.g. Reed switches are provided within said metering device circuitry (13) typically responsive to the presence of a magnetic field in the proximity. As is already well-known, those comprise two fine contacts contained generally within a glass tube and spaced so that there is only a very small gap between the contacts.

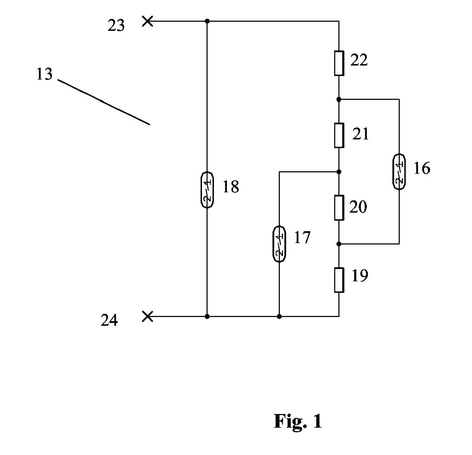

The terminal of each Reed switch (16, 17 and 18) is connected in between terminals of separate impedances (19, 20, 21 and 22) according to the circuit scheme provided in Fig. 1, demonstrating the resistive impedances (19, 20, 21 and 22). As is apparent in Fig. 1, while the resistive impedances 19 and 20 are in parallel with the reed switch 17, the resistive impedances 20 and 21 are in parallel with the Reed switch 16. In view of the same, it will be apparent that if a reference voltage is applied across terminals 23 and 24 by a voltage source which may comprise a part of the control unit, the flowing current will reflect the status (on/off) of respective Reed switches 16, 17 and 18. In other words, position of said magnetized portion (14) along its tangential path on the rotation element (14) will determine which reed switches (16, 17 and 18) are to be closed. Said magnetized portion (15) approaching said switches (16, 17 and 18) to a certain distance, as is apparent to those skilled in the art, will keep contacts of respective switches closed until it moves away from the operating distance. The intensity of the current between the terminals of the voltage source is therefore dependant on the status (on/off) of each Reed switch. In sum, revolution of the magnetized portion (15) produces different current values so as to indicate which combination of switches is energized at a given location of the same. The strength of said magnetized portion (15), the sensitivity of said Reed switches (16, 17 and 18) together with the distance between the rotation element (14) and the flowmeter circuitry (13) may be set in the manner that the switches 16 and 17 may close together.

The reed switch 18 is a short-circuit switch. The sensitivity of the Reed switch 18, the strength of the magnetized portion (15) and the distance between this two may be set to an appropriate value in order for ensuring that the Reed switch 18 is normally in open circuit position and only closes if the intensity of the magnetic field present in its immediate vicinity is greater than the intensity of the magnetic field produced by said magnetized portion (15). On the other hand, the switches 16 and 17 operate in turn, stay in the same status in succession and then re-operate in the same order.

According to the present invention, ohm values for each resistive impedance (19, 20, 21 and 22) may be set to appropriate values for a range of current intensities with regard to each of four closure combination of the switches 16 and 17, that is, when both are closed or open and one is closed while the other is open. The intensity of the current, which may be easily calculated using the Ohm's law, may be sensed by the control unit and records of separate current values with regard to each combination may also be kept by the same. The control unit may comprise memory cells in a conventional manner in order for storing data and may compare actual current data with pre-defined current data already stored to determine the flow rate and direction. Details of this will be apparent to those skilled in the art and need not be described herein furthermore.

Consequently, the control unit will monitor the intensity of current in the circuit, which is indicative of which switches are closed at a given time, and determine the flow rate of the rotation element (14), which is directly proportional to the flow rate. It will also determine the direction of rotation, which is necessary to ensure correct operation of the flowmeter.

If any malfunction occurs within the metering device, for instance in case a Reed switch break down, the deviation from the pre-defined current data, which generally shows up as a current irregularity, can be detected by the control unit. If the intensity of the magnetic field present in the immediate vicinity of the Reed switch 18 is greater than the intensity of the magnetic field produced by said magnetized portion (15) on the rotation element (14), said switch 18 would operate (break) and the control unit would produce an alert signal in a conventional manner, indicative of fraudulent magnetic intervention and disruption in counting the flow consumption. The same also applies to the case when the control unit is disconnected from the flowmeter circuitry (13).

The present invention proposes a circuitry (13) for flowmeters and a flowmeter comprising said circuitry which is suitable for simultaneously sensing the well-known "three functions" namely flow rate, flow direction and fraudulent interventions of magnetic type. The circuitry (13) is preferably embedded in a metering device (12) connected to a two-terminal control unit that is provided apart from said metering device (12). The distance in between these two may be from 2 cm to 200 meters. The metering device typically comprises a rotating element (14) having a magnetized portion (15) thereon. The flowmeter circuitry, as proposed by the present invention is a "two-terminal" circuitry having at least three magnetic switches (16, 17 and 18), none of the terminals of two of them (16, 17) being common. Thereby the control unit can be connected to the two terminals (23 , 24) of the circuitry (13) by way of using two core cables, which provide saving of material and labor costs of site mounting e.g. in large apartments or large size block residential areas.

## Claims

1. A circuitry (13) for flowmeters suitable for sensing flow rate, flow direction as well as fraudulent interventions of magnetic type in a metering device (12) connected to a two-terminal control unit that is provided apart from said metering device (12), said metering device comprising a rotating element (14) having a magnetized portion (15) thereon, **characterized in that** said flowmeter circuitry is a "two-terminal" circuitry having at least three magnetic switches (16, 17 and 18), none of the terminals of two of them (16, 17) being common, whereby said control unit can be connected to the two terminals (23 , 24) of the circuitry (13) by way of using two core cables.

2. A circuitry (13) for flowmeters as set forth in Claim 1, wherein switches 16, 17 and 18 are Reed switches.

3. A flowmeter as set forth in Claim 1 or 2 wherein switch 18 is a short-circuit switch only responsive to magnetic field ranges greater than that of said magnetised portion (15).

4. A flowmeter as set forth in Claim 3 wherein said switches 16 and 17 are in parallel with the resistive impedances 20, 21 and 19, 20 respectively.

5. A flowmeter comprising a metering device (12), a circuitry (13) suitable for sensing flow rate, flow direction as well as fraudulent interventions of magnetic type in said metering device (12) connected to a two-terminal control unit that is provided apart from said metering device (12), said metering device comprising a rotating element (14) having a magnetized portion (15) thereon, **characterized in that** said flowmeter circuitry of the flowmeter is a "two-terminal" circuitry having at least three magnetic switches (16, 17 and 18), none of the terminals of two of them (16, 17) being common, whereby said control unit can be connected to the two terminals (23 , 24) of the circuitry (13) by way of using two core cables.
